# EUROPÄISCHE PATENTSCHRIFT

(11) **EP 2 331 911 B1**
(45) Veröffentlichungstag und Bekanntmachung des Hinweises auf die Patenterteilung: **16.03.2016**
(21) Anmeldenummer: 09741256.3
(22) Anmeldetag: 25.09.2009
(51) Int. Cl.: G01D 3/08, H04Q 9/02

(54) **MESSUMFORMER**
MEASURING TRANSDUCER
TRANSDUCTEUR DE MESURE

(30) Priorität: 02.10.2008 DE 102008050354
(43) Veröffentlichungstag der Anmeldung: 15.06.2011
(73) Patentinhaber: Siemens Aktiengesellschaft, 80333 München (DE)
(72) Erfinder: HACH, Werner, 67071 Ludwigshafen-Oggersheim (DE)
(86) Internationale Anmeldenummer: PCT/EP2009/062431
(87) Internationale Veröffentlichungsnummer: WO 2010/037687

(56) Entgegenhaltungen:
- WO-A1-03/060851
- DE-A1- 10 021 913
- DE-A1- 19 728 381

## Beschreibung

Die Erfindung betrifft einen Messumformer mit einem Sensor, der eine physikalische Größe erfasst und in ein elektrisches Rohsignal umsetzt, einer Signalverarbeitungseinrichtung mit linearer Übertragungsfunktion, die das Rohsignal in ein Messsignal umsetzt, einer Ausgangsstufe, die ein dem Messsignal entsprechendes analoges Ausgangssignal abgibt, und einer Überwachungseinrichtung, die in einem Vergleicher das Ausgangssignal und das Rohsignal unter Berücksichtigung der linearen Übertragungsfunktion miteinander vergleicht und eine Fehlermeldung erzeugt, wenn die Abweichung zwischen dem Ausgangssignal und dem Rohsignal ein vorgegebenes Maß überschreitet.

Messumformer dienen dazu, eine physikalische Größe, wie zum Beispiel Temperatur, zu erfassen und in ein Ausgangssignal umzusetzen, das beispielsweise an eine Steuer- oder Regeleinrichtung übertragen wird. Der die physikalische Größe erfassende Sensor liefert in der Regel ein analoges elektrisches Rohsignal. Das Ausgangssignal des Messumformers kann digital oder analog sein, wobei im letzteren Fall das Ausgangssignal ein Spannungssignal oder ein Stromsignal, üblicherweise im Bereich 4 bis 20 mA ist. Die Umsetzung des analogen Rohsignals in das hier betrachtete analoge Ausgangssignal umfasst neben analogen Signalverarbeitungsschritten, wie Analogfilterung und Vorverstärkung, auch Signalverarbeitungsschritte, wie Nullpunktfestlegung und Skalierung (Festlegung des Messbereichs), die zumeist digital ausgeführt werden, so dass als weitere Signalverarbeitungsschritte eine Analog-/DigitalUmsetzung und Digital-/Analog-Umsetzung hinzukommen. In der Regel erfolgt die Signalverarbeitung mit linearer Übertragungsfunktion; das heißt, das Ausgangssignal ändert sich proportional mit dem Rohsignal.

Um Fehler bei der Signalverarbeitung zu erkennen, ist es beispielsweise bekannt, die Signalverarbeitung redundant oder diversitär auszuführen und die Ergebnisse (Ausgangssignal) auf Übereinstimmung zu prüfen. Es ist auch bekannt, dass Ergebnis eines Signalverarbeitungsalgorithmus zurückzurechnen und mit dem Eingangssignal (Rohsignal) zu vergleichen.

Aus der WO 03/060851 A1 ist ein Messumformer der eingangs angegebenen Art bekannt, bei dem in der Überwachungseinrichtung aus dem von dem Sensor gelieferten Rohsignal ein Hilfssignal gebildet wird, das mit dem Ausgangssignal des Messumformers verglichen wird, um im Falle einer ein vorgegebenes Maß überschreitenden Abweichung eine Fehlermeldung und zur sicherheitsgerichteten Einstellung des Ausgangssignals auszulösen. Zur Bildung des Hilfssignals wird das Rohsignal in einem zusätzlich zu dem Mikroprozessor der Signalverarbeitung vorgesehenen weiteren Mikroprozessor mit der Übertragungsfunktion der Signalverarbeitung verarbeitet. Bei der Umsetzung des von der Signalverarbeitungseinrichtung erzeugten Messsignals in das analoge Ausgangssignal kann es zu einer Verzögerung (Zeitkonstante der Ausgangsstufe) kommen, die einen unmittelbaren Vergleich des Hilfssignals mit dem Ausgangssignal erschwert. Außerdem ist der mit der Verwendung des weiteren Mikroprozessors verbundene rechen- und schaltungstechnischer Aufwand nicht unerheblich.

Gemäß der Erfindung werden die vorstehend genannten Nachteile dadurch vermieden, dass bei dem Messumformer der eingangs angegebenen Art die Überwachungseinrichtung in den Signalwegen des Rohsignals und des Ausgangssignals vor dem Vergleicher jeweils einen analogen Integrator aufweist, dass eine Zeitsteuerung vorhanden ist, die die beiden Integratoren zeitgleich zyklisch zurücksetzt und dass der Vergleicher dazu ausgebildet ist, die die durch die Integration erhaltenen Integrationswerte vor dem Zurücksetzen der Integratoren zu vergleichen.

Im Unterschied zu dem bekannten Messumformer werden das Rohsignal, bzw. das daraus abgeleitete Hilfssignal, und das Ausgangssignal nicht unmittelbar miteinander verglichen, sondern ihre zyklisch jedes Mal aufs Neue aufintegrierten Werte. Dadurch wird die Überwachung der Verarbeitung des Rohsignals und die Erzeugung des Ausgangssignals bei dem erfindungsgemäßen Messumformer gegenüber kleineren Signalstörungen und -verzögerungen robust. Die analoge Integration ist mit herkömmlichen Schaltungsmitteln sehr einfach zu realisieren.

Um den Vergleich der aus dem Rohsignal und Ausgangssignal gebildeten Integrationswerte zeitunkritisch zu machen und einen dementsprechend einfachen Schaltungsaufbau des Vergleichers realisieren zu können, ist den Integratoren vorzugsweise jeweils ein Speicher nachgeordnet, der den Integrationswert des jeweils vorgeordneten Integrators unmittelbar vor dessen Zurücksetzen übernimmt und für die nachfolgende Zyklusdauer hält.

Vorzugsweise bestehen sowohl die Integratoren als auch die Speicher und der Vergleicher aus Analogschaltungen, die besonders einfach zu realisieren sind und keine Rechenleistung beanspruchen.

Um für den Vergleich des Rohsignals und des Ausgangssignals die lineare Übertragungsfunktion der Signalverarbeitung zu berücksichtigen, kann das Rohsignal entsprechend der Übertragungsfunktion vor seiner Integration analog verstärkt oder das erfasste Ausgangssignal vor seiner Integration invers zur Übertragungsfunktion abgeschwächt werden. Insbesondere letzteres lässt sich sehr einfach mit einer linearen Ausgangsstufe, beispielsweise einem Spannungsteiler, realisieren.

Zur weiteren Erläuterung der Erfindung wird im Folgenden auf die Zeichnung Bezug genommen, in der
- Figur 1: ein Ausführungsbeispiel des erfindungsgemäßen Messumformers und
- Figur 2: ein die Integration des Roh- bzw. Ausgangssignals beispielhaft verdeutlichendes Zeitdiagramm zeigen.

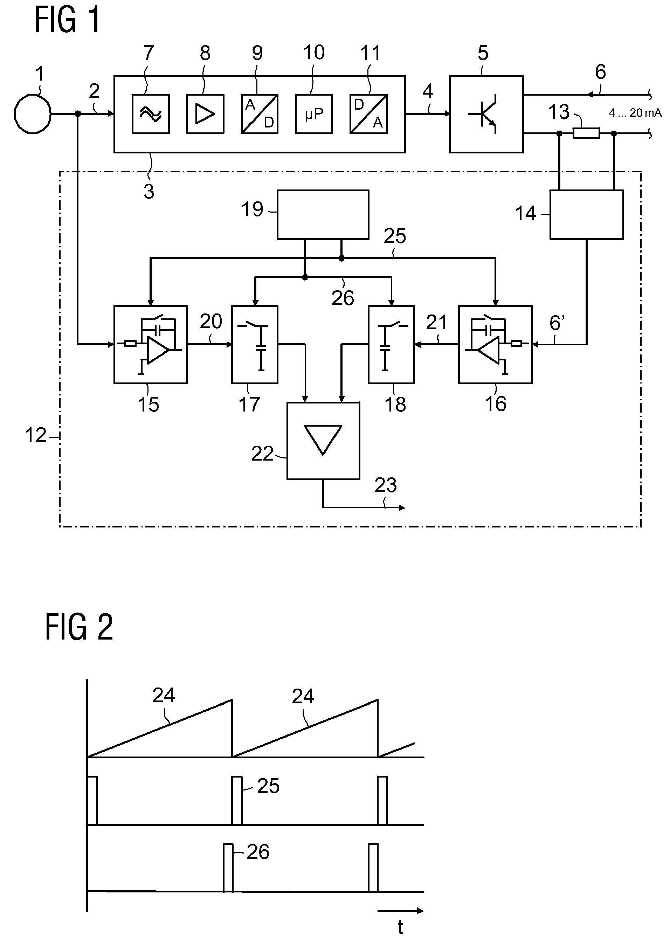

Figur 1 zeigt in Form eines vereinfachten Blockschaltbildes einen Messumformer mit einem Sensor 1, der eine physikalische Größe, zum Beispiel Temperatur, erfasst und in ein analoges Rohsignal 2, zum Beispiel eine elektrische Spannung, umsetzt. Das Rohsignal 2 wird einer Signalverarbeitungseinrichtung 3 zugeführt, die das Rohsignal 3 messtechnisch aufbereitet und zu einem analogen oder digitalen Messsignal 4 verarbeitet. Das Messsignal 4 wird in einer Ausgangsstufe 5 in ein analoges Ausgangssignal 6, hier zum Beispiel ein 4 bis 20 mA-Stromsignal, umgesetzt. Die Signalverarbeitung erfolgt linear und kann zum Beispiel folgende Schritte umfassen: analoge Entzerrung und Filterung 7, Vorverstärkung 8, Analog-/Digital-Umsetzung 9, digitale Nullpunkt- und Messbereichsfestlegung 10 sowie Digital-/Analog-Umsetzung 11. Die Digital-/Analog-Umsetzung 11 kann auch in der Ausgangsstufe 5 implementiert sein.

Zur Überwachung der Verarbeitung des Rohsignals 2 und Erzeugung des Ausgangssignals 6 ist eine Überwachungseinrichtung 12 vorgesehen, der das Rohsignal 2 und das Ausgangssignal 6 zugeführt wird. Das Ausgangssignal 6 kann, soweit die entsprechenden Mittel vorhanden sind, direkt von der Ausgangsstufe 5 bezogen werden oder, wie hier gezeigt, als Spannungsabfall über einem Strommesswiderstand 13 erfasst werden. In einer Anpassstufe 14, zum Beispiel einem Spannungsteiler, wird das erfasste Ausgangssignal 6 umgekehrt proportional zu der linearen Übertragungsfunktion (Verstärkung) der Signalverarbeitungseinrichtung 3 abgeschwächt. Das so erhaltene abgeschwächte Ausgangssignal 6' und das Rohsignal 2 werden jeweils einem analogen Integrator 15 bzw. 16 gefolgt von einem Speicher 17 bzw. 18 zugeführt. Die Integratoren 15 und 16 und die Speicher 17 und 18 werden jeweils synchron von einer Zeitsteuerung 19 gesteuert. In den Integratoren 15 und 16 werden das Rohsignal 2 und das abgeschwächte Ausgangssignal 6' integriert, wobei die Integratoren 15, 16 durch Rücksetzimpulse 25 der Zeitsteuerung 19 zyklisch zurückgesetzt werden. Die unmittelbar vor dem Zurücksetzen erreichten Integrationswerte 20, 21 werden durch Steuerimpulse 26 der Zeitsteuerung 19, in die Speicher 17 und 18 überführt und dort für die Dauer eines Zyklus bereitgestellt. Ein Vergleicher 22 vergleicht die Integrationswerte 20, 21 und erzeugt eine Fehlermeldung 23, wenn die Abweichung zwischen beiden Integrationswerten 20 und 21 ein vorgegebenes Maß überschreitet.

Figur 2 verdeutlicht in einem Zeitdiagramm die Integrationszyklen 24, die Rücksetzimpulse 25 der Zeitsteuerung 19 für die Integratoren 15, 16 und die Steuerimpulse 26 zur Überführung der Integrationswerte 20, 21 in die Speicher 17, 18.

## Patentansprüche

1. Messumformer mit einem Sensor (1), der eine physikalische Größe erfasst und in ein elektrisches Rohsignals (2) umsetzt, einer Signalverarbeitungseinrichtung (3) mit linearer Übertragungsfunktion, die das Rohsignal (2) in ein Messsignal (4) umsetzt, einer Ausgangsstufe (5), die ein dem Messsignal (4) entsprechendes analoges Ausgangssignal (6) abgibt, und einer Überwachungseinrichtung (12), die in einem Vergleicher (22) das Ausgangssignal (6) und das Rohsignal (2) unter Berücksichtigung der linearen Übertragungsfunktion miteinander vergleicht und eine Fehlermeldung (23) erzeugt, wenn die Abweichung zwischen dem Ausgangssignal (6) und dem Rohsignal (2) ein vorgegebenes Maß überschreitet, **dadurch gekennzeichnet, dass** die Überwachungseinrichtung (12) in den Signalwegen des Rohsignals (2) und des Ausgangssignals (6) vor dem Vergleicher (22) jeweils einen analogen Integrator (15, 16) aufweist, dass eine Zeitsteuerung (19) vorhanden ist, die die beiden Integratoren (15, 16) zeitgleich zyklisch zurücksetzt und dass der Vergleicher (22) dazu ausgebildet ist, die durch die Integration erhaltenen Integrationswerte (20, 21) vor dem Zurücksetzen der Integratoren (15, 16) zu vergleichen.

2. Messumformer nach Anspruch 1, **dadurch gekennzeichnet, dass** den Integratoren (15, 16) jeweils ein Speicher (17, 18) nachgeordnet ist, der den Integrationswert (20, 21) des jeweils vorgeordneten Integrators (15, 16) unmittelbar vor dessen Zurücksetzen übernimmt und für die nachfolgende Zyklusdauer hält.

3. Messumformer nach Anspruch 1 oder 2, **dadurch gekennzeichnet, dass** die Integratoren (15, 16), die Speicher (17, 18) und der Vergleicher (22) aus Analogschaltungen bestehen.

4. Messumformer nach einem der vorangehenden Ansprüche, **dadurch gekennzeichnet, dass** zur Berücksichtigung der linearen Übertragungsfunktion eine lineare Anpassstufe (14) vor einem der beiden Integratoren (15, 16) vorgesehen ist.

## Claims

1. Measuring transducer with a sensor (1) which acquires a physical variable and converts it into an electrical raw signal (2), a signal processing device (3) with a linear transmission function which converts the raw signal (2) into a measuring signal (4), an output stage (5) which emits an analogue output signal (6) corresponding to the measuring signal (4), and a monitoring device (12) which, in a comparator (22), compares the output signal (6) and the raw signal (2) with one another while taking account of the linear transmission function and generates an error message (23) if the deviation between the output signal (6) and the raw signal (2) exceeds a predefined measurement, **characterised in that** the monitoring device (12), in the signal paths of the raw signal (2) and the output signal (6) upstream of the comparator (22), has in each case an analogue integrator (15, 16), that a time controller (19) is present which resets both integrators (15, 16) in a cyclical manner simultaneously and that the comparator (22) is embodied to compare the integration values (20, 21) obtained through the integration before the integrators (15, 16) are reset.

2. Measuring transducer according to claim 1, **characterised in that** downstream of the integrators (15, 16) there is a memory (17, 18) in each case, which takes over the integration value (20, 21) of the respective upstream integrator (15, 16) directly before the resetting thereof and retains it for the subsequent cycle duration.

3. Measuring transducer according to claim 1 or 2, **characterised in that** the integrators (15, 16), the memories (17, 18) and the comparator (22) consist of analogue circuits.

4. Measuring transducer according to one of the preceding claims, **characterised in that** a linear adapter stage (14) is provided upstream of one of the two integrators (15, 16) in order to take account of the linear transmission function.

## Revendications

1. Transducteur de mesure comprenant un capteur ( 1 ) qui détecte une grandeur physique et la transforme en un signal ( 2 ) électrique brut, un dispositif ( 3 ) de traitement du signal à fonction de transfert linéaire, qui transforme le signal ( 2 ) brut en un signal ( 4 ) de mesure, un étage ( 5 ) de sortie qui émet un signal ( 6 ) analogique correspondant au signal ( 4 ) de mesure et un dispositif ( 12 ) de contrôle qui compare, dans un comparateur ( 22 ), le signal ( 6 ) de sortie et le signal ( 2 ) brut entre eux, en tenant compte de la fonction de transfert linéaire et qui produit un avertissement ( 23 ) d'erreur si l'écart entre le signal ( 6 ) de sortie et le signal ( 2 ) brut dépasse une valeur donnée à l'avance, **caractérisé en ce que** le dispositif ( 12 ) de contrôle a, dans les trajets de signaux du signal ( 2 ) brut et du signal ( 6 ) de sortie avant le comparateur ( 22 ), respectivement un intégrateur ( 15, 16 ) analogique, **en ce qu'**il y a une commande ( 19 ) de temps qui remet à l'état initial cycliquement en même temps les deux intégrateurs ( 15, 16 ) et **en ce que** le comparateur ( 22 ) est constitué pour comparer les valeurs ( 20, 21 ) d'intégration obtenues par intégration avant la remise à l'état initial des intégrateurs ( 15, 16 ).

2. Transducteur de mesure suivant la revendication 1, **caractérisé en ce qu'**en aval des intégrateurs ( 15, 16 ) est montée respectivement une mémoire ( 17, 18 ) qui prend en charge la valeur ( 20, 21 ) d'intégration de l'intégrateur ( 15, 16 ) monté en amont respectivement, immédiatement avant sa remise à l'état initial et la conserve pour la durée de cycle suivante.

3. Transducteur de mesure suivant la revendication 1 ou 2, **caractérisé en ce que** l'intégrateur ( 15, 16 ), les mémoires ( 17, 18 ) et le comparateur ( 22 ) sont constitués de circuits analogiques.

4. Transducteur de mesure suivant l'une des revendications précédentes, **caractérisé en ce que**, pour prendre en compte la fonction de transfert linéaire, il est prévu un étage ( 14 ) d'adaptation linéaire avant les deux intégrateurs ( 15, 16 ).
